# EUROPEAN PATENT SPECIFICATION

(11) **EP 0 501 582 B1**
(45) Date of publication and mention of the grant of the patent: **02.08.1995**
(21) Application number: 92200525.1
(22) Date of filing: 24.02.1992
(51) Int. Cl.: C07F 9/655, C08K 5/523

(54) **Phenolphthalein bis(dihydrocarbyl phosphate) compounds**
Phenolphtalein bis(dihydrocarbyl phosphat)-Verbindungen
Composés de bis(dihydrocarbyl phosphates) de phénolphtaléine

(30) Priority: 25.02.1991 US 660452
(43) Date of publication of application: 02.09.1992
(73) Proprietor: Akzo Nobel N.V., 6824 BM Arnhem (NL)
(72) Inventor: Bright, Danielle Angrand, New City, New York 10956 (US); Aaronson, Alan Michael, Flushing Meadows, New York 11365 (US)
(74) Representative: Schalkwijk, Pieter Cornelis

(56) References cited:
- US-A- 4 457 922
- CHEMICAL ABSTRACTS, vol. 82, no. 16, 21 April 1975, Columbus, Ohio, US; abstract no. 99218, page 64 ;

## Description

### Background of the Invention

A variety of bis(dihydrocarbyl phosphate) compounds are known to persons of ordinary skill in the art who might be interested, for example, in using such organophosphorus compounds as flame retardants for polymers. Examples of bis(hydrocarbyl phosphate) compounds which contain various types of bridging groups between the two phosphate moieties can be found by consulting the following: Japanese Kokai No. 74/40,342 (aliphatic divalent groups which can contain an ether bond); U.S. Patent No. 3,869,526 (aliphatic straight, branched or cyclic organic alkylene residues or a hydrocarbon ether residue); Japanese Kokai No. 82/174,331 (phenyl, bisphenol A-derived, biphenyl, etc.); U.S. Patent No. 4,343,732 (a residue of a polyhydric alcohol or phenol or of a polyoxyalkylene glycol).
Japanese Kokai No. 82/55,947 depicts a rather wide variety of bisphosphate compounds with differing bridging groups including those containing multiple phenyl rings in the bridging group but not one containing a nucleus derived from phenolphthalein, also termed "3,3-bis(4-hydroxyphenyl)-1(3H)-isobenzofuranone".
The use of phenolphthalein-based polymers, as contrasted to monomeric bis(hydrocarbyl phosphates), as flame retardants is disclosed in the following three literature references: J. Polym. Sci., Chem. Ed., Vol. 19, pages 2151, 2659, and 2773 (1981). In addition, the following patent documents indicate the flame retardant characteristics for a variety of phenolphthalein-containing polymers. U.S. Patent Nos. 4,057,532 (phenolphthalein polyesters); 4,134,936 (copolycarbonates of phenolphthalein polycarbonates and other polycarbonates); and 4,167,536
(organopolysiloxane-phenolphthalein-polycarbonate copolymers).
Japanese Kokai No. 74/88,928 describes fire resistant thermoplastic compositions which contain a phosphate, phosphonate, phosphite or phosphinate polyester (a polymeric additive also) of phenolphthalein containing bromine or chlorine substituents on the rings.

### Description of the Invention

The instant invention relates to novel phenolphthalein bis(hydrocarbyl phosphate) compounds, as contrasted to polymers, and to flame retarded polymer compositions containing them, for example, either thermoplastic or thermoset polymers. The compounds of the instant invention have the general formula 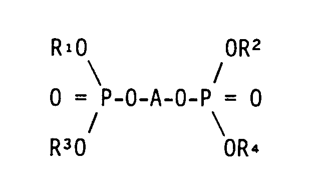
where -O-A-O- is a phenolphthalein moiety (minus the hydroxy hydrogen atoms), and R¹ through R⁴ each independently represent hydrocarbyl, such as C1-C20 alkyl, cycloalkyl, allyl, C2-C12 alkenyl, or aryl (e.g., phenyl, 2-xylenyl, cresyl, naphthyl, xenyl, isopropylphenyl, and t-butylphenyl). If desired, R¹ through R⁴ and A can both be substituted with such atoms as chloro or bromo. For example, 2,4-dibromophenyl and 2,4,6-tribromophenyl are representative R groups when halogenated phenyl groups are desired.
The compounds can be formed by reaction of an alkali metal salt of phenolphthalein with at least twice the stoichiometric amount of the appropriate dihydrocarbylhalo-phosphate under phase transfer conditions.

The following Examples illustrate various embodiments of the instant invention.

### EXAMPLE 1

To a two liter, three-necked flask equipped with a mechanical stirrer, dropping funnel and thermometer was added 500 ml of water and 40 gm (1.0 mole) of sodium hydroxide while stirring. Phenolphthalein (159 gm, 0.50 mole) was added portionwise in such a manner to keep the temperature below 40°C. The reaction mixture was purple. After cooling to 25°C, 750 ml of methylene chloride and 5 gm of tricaprylyl methyl ammonium chloride (ALIQUAT 336 brand) were added to the reaction mixture. Then, 336 gm (1.25 moles) of diphenyl chlorophosphate were added dropwise at 20-25°C over one and one-half hours while maintaining good stirring. When the addition was completed, the purple color was replaced by a very light pink color. The reaction mixture was stirred overnight at room temperature and lost the pink color. The two layers were separated. The organic layer was washed with 3 x 500 ml of 2% sodium hydroxide solution followed by 500 ml of water. The solvent was removed under vacuum to give 326.3 gm of a very viscous yellow oil which assayed at 97% by liquid chromatography (LC). The anticipated structure, tetraphenyl phenolphthalein diphosphate, was confirmed by ³¹P NMR.

### EXAMPLE 2

To a 500 ml three-necked flask equipped with mechanical stirrer, dropping funnel and thermometer, there was added 100 ml of water and 6.36 gm (0.159 mole) of sodium hydroxide while stirring.
Tetrabromophenolphthalein (50 gm, 0.0789 mole) was added portionwise in such a way to keep the temperature below 40°C. The reaction mixture was purple.
After cooling to 25°C, 200 ml of methylene chloride and 0.2 gm of ALIQUAT 336 brand product were added to the reaction mixture. Then 41.2 gm (0.159 mole) of diphenyl chlorophosphate was added dropwise at 20-25°C over 35 minutes while maintaining good stirring. When the addition was completed, the reaction mixture was still purple. The reaction mixture was stirred overnight at room temperature and turned light yellow.
The two layers were separated. The organic layer was washed with 2 x 200 ml of 2% sodium hydroxide solution followed by 3 x 200 ml of water. The solvent was removed under vacuum to give 57.6 gm of a very viscous yellow oil that solidified and assayed at 96% by LC as tetrabromophenol-phthalein bis(diphenylphosphate).

### EXAMPLE 3

Nylon 6 was mixed with 10% silica (SILTEX brand) to prevent dripping of the formulation when tested as described below, and was then tested with no fire retardant additive and with an additional 10% of the compound of Example 1. The Limiting Oxygen Index (LOI) values obtain are as follows:

| Additive | LOI |
|---|---|
| None | 23.0 |
| Ex. 1 Cpd-10% | 25.6 |

### EXAMPLES 4-5

The following flame retardancy tests of tetraphenyl phenolphthalein diphosphate, from Example 1, were undertaken in nylon 6 using inorganic drip retarders and carriers in view of the propensity of nylon 6 to drip when burned.
The formulation used in Example 4 comprised 70% nylon 6, 10% of the diphosphate, 5% of finely divided hydrated synthetic calcium silicate (MICRO-CEL E brand), as a carrier for the diphosphate, and 15% of fused silica powder (SILTEX 32 brand). The flammability results were: 30.8 LOI; UL 94 - burned with a flaming drip and had a burning time in excess of that for V2.
The formulation used in Example 5 comprised 70% nylon 6, 20% of the diphosphate, and 10% of the calcium silicate carrier used above. The flammability results were better than for Example 4: 32.0 LOI; UL 94 - almost a V1 rating with an average burn time of 26.8 seconds and a longest burn time of 41 seconds (V1 requires an average burn time of not over 25 seconds with a longest burn time of 30 seconds).

The foregoing Examples illustrate only certain embodiments of the present invention and, for that reason, should not be construed in a limiting sense. The scope of protection sought is set forth in the claims which follow.

## Claims

1. A phenolphthalein bis(dihydrocarbyl phosphate) compound.

2. A phenolphthalein bis(diphenyl phosphate) compound.

3. A compound of the formula 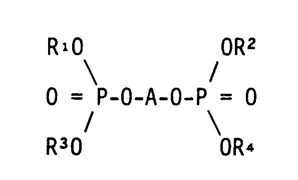 wherein R¹, R², R³, and R⁴ each independently represent hydrocarbyl, and -O-A-O- is a phenolphthalein moiety minus its hydroxy hydrogen atoms.

4. A compound as claimed in Claim 3 wherein the groups R¹, R², R³, and R⁴ are aryl.

5. A polymer composition containing a compound in accordance with any one of the preceding claims as a flame retardant.

## Patentansprüche

1. Phenolphthalein-bis(dihydrocarbylphosphat)-Verbindung.

2. Phenolphthalein-bis(diphenylphosphat)-Verbindung.

3. Verbindung der Formel 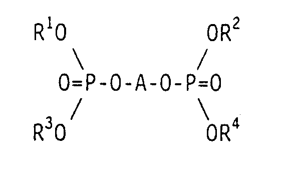 in der R¹, R², R³ und R⁴ jeweils unabhängig Hydrocarbyl und -O-A-O- eine Phenolphthaleingruppe ohne ihre Hydroxylwasserstoffatome ist.

4. Verbindung nach Anspruch 3, in welcher die Gruppen R¹, R², R³ und R⁴ Aryl sind.

5. Polymer-Zubereitung, die eine Verbindung gemäss einem der vorangehenden Ansprüche als flammhemmendes Mittel enthält.

## Revendications

1. Bis-(dihydrocarbyl-phosphate) de Phénolphtaléine.

2. Bis-(diphényl phosphate) de Phénolphtaléine.

3. Composé représenté par la formule: 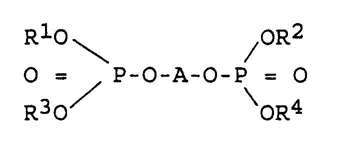 dans laquelle:
R¹, R², R³ et R⁴ sont chacun indépendamment un groupe hydrocarbyle; et
-O-A-O- est une partie phénolphtaléine dont sont retirés les atomes d'hydrogène des groupes hydroxy.

4. Composé suivant la revendication 3, dans lequel les groupes R¹, R², R³ et R⁴ sont des groupes aryles.

5. Composition de polymère contenant un composé selon l'une quelconque des revendications précédentes, en tant qu'agent retardateur de flamme.
